(19) Europäisches Patentamt

European Patent Office

Office européen des brevets

(11) **EP 0 980 895 A1**

(12) **EUROPEAN PATENT APPLICATION**
published in accordance with Art. 158(3) EPC

(43) Date of publication:
**23.02.2000 Bulletin 2000/08**

(51) Int. Cl.[7]: **C08L 67/04**, C08K 5/54,
C08G 63/695, B29C 45/00,
B29C 47/00, B29C 55/28
// B29K67:00

(21) Application number: **99937939.9**

(22) Date of filing: **05.03.1999**

(86) International application number:
**PCT/JP99/01062**

(87) International publication number:
**WO 99/45066 (10.09.1999 Gazette 1999/36)**

(84) Designated Contracting States:
**AT BE CH CY DE DK ES FI FR GB GR IE IT LI LU
MC NL PT SE**

(30) Priority: **05.03.1998 JP 5360998**

(71) Applicant:
**Showa Denko Kabushiki Kaisha
Tokyo 105-8518 (JP)**

(72) Inventors:
• **TAKAHASHI, Tsuyoshi,
Showa Denko K.K.
Kawasaki-shi, Kanagawa 210-0865 (JP)**
• **IMAIZUMI, Mitsuhiro,
Showa Denko K.K.
Kawasaki-shi, Kanagawa 210-0865 (JP)**

(74) Representative:
**Strehl Schübel-Hopf & Partner
Maximilianstrasse 54
80538 München (DE)**

(54) **HIGH-MOLECULAR ALIPHATIC POLYESTER RESIN COMPOSITION**

(57)    A high molecular weight aliphatic polyester resin composition having biodegradability, and being superior in various properties such as mechanical strength and mold processing properties is obtained by treating (A) an aliphatic polyester resin with (B) an organosilane compound which contains amino groups.

## Description

Technical Field

The present invention relates to a high molecular weight aliphatic polyester resin composition which has biodegradability, and which is superior in mold processing properties, mechanical strength and the like, by an increased molecular weight thereof.

The present invention is based on Japanese Patent Application No. Hei 10-53609 filed in Japan, the content of which is incorporated herein by reference.

Background Art

In recent years, environmental problems due to waste plastics and problems such as pollution of the oceans by plastics have been raised. As one solution to these problems, the development of plastics having biodegradability has been progressing. Biodegradable plastic is plastic under which certain circumstances can breakdown and, in general, when they are buried in the ground, biodegradable plastics breakdown into water and carbon dioxide gas or the like due to the activity of bacteria and the like.

At present, biodegradable plastics which are being developed or which are being put to practical use are classified into polyesters produced by microorganisms such as hydrogen bacteria, blue green algae, or the like; natural high polymers which have polysaccharides, such as starch, cellulose and chitin, as their starting materials; aliphatic polyesters produced by chemosynthesis; or the like.

As aliphatic polyester resins having properties which can be put to practical use and having a high molecular weight, for example, there are those proposed in Japanese Unexamined Patent Application, First Publication No. Hei 4-189823; Japanese Unexamined Patent Application, First Publication No. Hei 5-70579, and the like.

However, while the aliphatic polyesters obtained by the above-mentioned methods can be molded into films and the like, when compared with polyethylene and the like, they have the problems of being inferior in molding stability and of not yet being satisfactory with respect to various types of mechanical strength.

In particular, with respect to films formed by means of the most generally used tubular film process for use as bags, there are weaknesses of poor tearing strength and forming stability.

Disclosure of Invention

In consideration of the above-mentioned circumstances, the present invention has an object of solving these problems by means of an aliphatic polyester resin composition which has improved form processing properties and the molecular weight of which has been additionally increased.

The present inventors discovered as the result of repeated and careful research that the above-mentioned object could be achieved by means of a treatment using a specific organosilane compound, and based on this knowledge they perfected the present invention.

In more detail, the present invention provides a high molecular weight aliphatic polyester resin composition obtained by treating (A) an aliphatic polyester resin with (B) an organosilane compound which contains amino groups; a use thereof; and a manufacturing method therefor.

Best Mode for Carrying out the Invention

The resin composition of the present invention is obtained by treating (A) an aliphatic polyester resin (hereinafter referred to as Component (A)) with (B) an organosilane compound which contains amino groups (hereinafter referred to as Component (B)); and it may be a mixture containing unreacted Component (A) and Component (B) in addition to the reaction products of Component (A) and Component (B).

As (A) the aliphatic polyester resin used in the present invention, one which has a hydroxyl group on a part of at least its terminal can be mentioned, for example, polyester resin biosynthesized by means of microorganisms, polylactic acid resin, polycaprolactone resin, aliphatic polyester resin whose main components are glycol and aliphatic dicarboxylic acid, and the like can be mentioned. Examples which are commercially available or under experimental manufacture are "Biopol" manufactured by Japan Monsanto Ltd., "Lacea" manufactured by Mitsui Chemicals Ltd., "Lacty" manufactured by Shimadzu Corp., "placcel" manufactured Diacel Chemical Industries Ltd., and "bionolle" manufactured by Showa Highpolymer Co. Ltd.

From among these, aliphatic polyester resins whose main components are glycol and aliphatic dicarboxylic acid are preferable.

As the glycol, for example, ethylene glycol, 1,4-butanediol, 1,6-hexanediol, decamethylene glycol, and the like can be mentioned, and these may also be used together. In addition, as the aliphatic dicarboxylic acid, succinic acid, adipic acid, suberic acid, sebacic acid, dodecane dioxide, and the like can be mentioned, and these may also be used together. The above-mentioned glycols and aliphatic dicarboxylic acids can be combined as desired. As examples of preferable combinations, for example, the above-mentioned bionolle # 1000 (polybutylene succinate), # 3000 (polybutylene succinate-co-adipate) and # 6000 (polyethylene succinate) can be mentioned.

In addition, aromatic monomers (glycols, dicarboxylic acids, or their anhydrides) may be copolymerized at 10 mol % or lower with respect to (A) the aliphatic polyester resin, and within a range which does not noticeably impair biodegradability.

Furthermore, bonds (for example, amide bonds, urethane bonds, and the like) other than ester bonds may be contained in (A) the aliphatic polyester resin at 10 mol % or less with respect to ester bonds within (A) the aliphatic polyester resin and within a range which does not noticeably impair biodegradability.

As (B) the organosilane compound which contains amino groups (hereinafter referred to as "silane compound") used in the present invention, a silane compound having at least one amino group and at least two methoxy and/or ethoxy groups can be mentioned. As specific examples, 3-aminopropyltrimethoxysilane, 3-aminopropyltriethoxysilane, 3-aminopropylmethyldiethoxysilane, 3-ureidopropyltriethoxysilane, 2-(2-aminoethylthioethyl)diethoxymethylsilane, 1-trimethoxysilyl-2-(aminomethyl)phenylethane, and the like can be mentioned.

As the silane compound (B), when a silane compound having two methoxy and/or ethoxy groups is used, it is effective in increasing the molecular weight, and when a silane compound having three methoxy and/or ethoxy groups is used, it is effective in increasing the molecular weight and, at the same time, in introducing long chain branches. Consequently, in consideration of the properties of desired molded product and the molding process method, there are many situations in which it is preferable to use the above-mentioned silane compounds together.

The amount of the silane compound used with respect to 100 parts by weight of the aliphatic polyester resin is preferably 0.01 to 10 parts by weight, more preferably 0.05 to 5.0 parts by weight, and in particular 0.1 to 2.0 parts by weight is most suitable.

In addition, in the present invention, and depending also on the use, it is preferable for the above-mentioned silane compound to be diluted in advance with (C) a plasticizer. By means of dilution with a plasticizer, it is possible to obtain a more uniform dispersion, and, in particular, it is possible to expect further reductions in gelling and fish-eye when forming films.

As the plasticizer, it is possible to use plasticizers which are in general use in this industry. For example, phthalic esters, aliphatic dibasic acid esters, aliphatic esters, aliphatic ether esters, phosphate esters, epoxy plasticizers, acid glycols, and the like can be mentioned. As specific examples, di 2-ethylhexyl (DOP), dioctyl adipate (DOA), butyl oleate (BO), adipic acid ether ester, epoxided soybean oil (ESO), acetyl tributyl citrate (ATBC), ethylene glycol, propylene glycol, and the like can be mentioned. From among these, ESO and adipic acid ether ester are preferable. The proportion of the plasticizer incorporated with respect to 1 part by weight of the silane compound is 0.5 to 5 parts by weight, and 1.0 to 3 parts by weight is particularly preferable. For use, it is preferable to eliminate minute quantities of moisture from the plasticizer.

The high molecular weight aliphatic polyester resin composition of the present invention (hereinafter referred to as "resin composition") is obtained by means of melting and reacting each of the above-mentioned components. As the method for this melting and reacting, it is possible to use methods and devices which are known in the present technical field. In more detail, a method in which after mixing in advance using a tumbler, Henschel mixer or the like, kneading is carried out using a single screw or a double screw extruder; a method in which the above-mentioned silane compound or a mixture of the silane compound and the plasticizer are poured into the barrel of an extruder, or a method of direct addition to the reaction vessel at the time of polymerization of the aliphatic polyester, and the like can be mentioned.

When an extruder is used, it is preferable for it to have a vacuum vent. The kneading temperature depends on the silane compound being used, but the temperature should be higher than the melting temperature of the resin and is preferably 220° C or less, and more preferably 200° C or less. When the temperature of the resin exceeds 220° C, there is the risk that discoloring will occur and, therefore, this is not preferable. In addition, it is preferable for the pressure of the vacuum vent to be 150 mmHgA or less, especially 100 mmHgA or less.

In addition, with regard to the addition method for the silane compound, this may be done by blending the silane compound with the resin in advance, or when an extruder with a side feeder is used, the silane compound can be added (poured in) using the side feeder.

In addition, the resin composition of the present invention has its molecular weight increased by means of treating (A) the aliphatic polyester resin with (B) an organosilane compound which contains amino groups; and more specifically, it preferably has a weight average molecular weight (hereinafter referred to as "Mw") of 40,000 or greater as measured by a GPC-MALLS method.

In addition, with regard to Mw, 60,000 or greater is more preferable, 80,000 or greater is even more preferable, and 100,000 or greater is particularly preferable. Furthermore, depending on the use, a Mw of 200,000 or greater is even more preferable.

The GPC-MALLS method is a method in which the resin composition is separated by gel permeation chromatography (GPC), and then the absolute molecular weight is measured using a multi-angle laser light scattering (MALLS) device, and a known method such as those described in K. Yoshikawa, et al., POLYMER, 37, 1281 (1996), or K. Yoshikawa, et al., PPS-14, Yokohama, Japan, 196 (1998), for example, can be used.

In addition, it is preferable for the resin composition of the present invention to have a swell value of 50% or greater. The swell value is a numerical value which indicates the degree of the expanding phenomenon directly after the extrusion product is extruded from the die orifice, and it is used as an indicator of the Weissenberg effect (hereinafter referred to as the "normal stress effect").

The swell value is calculated using the following formula and based on JIS K7210, using the melt indexer used for MFR; a sample strand is discharged from a nozzle under MFR measurement conditions; the sample strand is cut when it hangs down 2 cm; and the diameter (D) at a position 5 mm from the lower end is measured. The nozzle diameter is $D_0$.

$$\text{swell value (\%)} = [(D - D_0) / D_0] \times 100$$

In general, the swell value increase as the molecular weight increases, and is also said to increase due to the introduction of long chain branches.

As the swell value, and depending on the molding method, 50 to 250% is preferable. For example, for tubular film process, 50 to 80% is preferable; for extrusion lamination molding, 70 to 120% is ideal; and for high expansion molding 80 to 200% is ideal.

The resin composition of the present invention has a Mw of 40,000 or greater or preferably has a Mw of 40,000 and long chain branches. Long chain branches are linear polymers, and molecular chains which are highly polymerized to the same extent as the main chain are said to be attached as branches.

The determination of whether long chain branches are present or not is conducted by comparing the inertial square diameter, measured at the same time as the absolute molecular weight using the GPC-MALLS method mentioned above, with that of a linear aliphatic polyester of the same molecular weight, and if it is clearly smaller, long chains are present.

In more detail, a calibration curve showing the relation between molecular weight and inertia square diameter is prepared in advance by manufacturing linear aliphatic polyesters of a different molecular weights, and the presence or absence of branching is determined by means of comparison with this calibration curve.

For example, if the pair inertia square diameter of a linear aliphatic polyester calibration curve is $S_L$, and the pair inertia square diameter of an aliphatic polyester of the same Mw is $S_B$, a determination can be made in the following manner according to the ratio thereof ($S_B/S_L$).

0.90 or less long chain branches present
greater than 0.90 and 0.95 or less a few long chain branches present
greater than 0.95 no branch chains

The MFR (measured according to JIS K7210, and under conditions of a temperature of 190° C and load of 2.16 kgf) of the composition of the present invention is preferably 10 g/10 minutes, more preferably 5 g/10 minutes or less, and, in particular, ideally 3 g/10 minutes or less, depending also on the desired molding process method, the application, and the like.

The resin composition of the present invention can be made into a molded product by means of various known molding methods. For example, it is possible to suitably use injection molding, various types of extrusion molding, extrusion gas foaming, and the like. The films and laminates obtained using, from among extrusion molding methods, tubular film process, T-die techniques, extrusion lamination techniques, and the like are superior in tearing strength and, in addition, in mechanical strength. In particular, the use of blown films of MFR of 3 g/10 minutes or less is preferable. A blow-up ratio during inflation molding of 2 ~ 8 is preferable, and of 2.5 ~ 6 is particularly preferable. In addition, the thickness of this film is usually 2 ~ 200 μm, preferably 5 ~ 100 μm, and more preferably 8 ~ 60 μm.

The blown film obtained by the present invention has superior properties in strength in the MD direction (the direction of pulling) and the TD direction (the direction perpendicular to the direction of pulling) and the balance thereof. As this characteristic, a tearing strength in both the MD direction and the TD direction of 7 kg/cm or greater is preferable and of 8 kg/cm or greater is particularly preferable.

In addition, the resin composition of the present invention can of course be used independently, or it can be blended with the aliphatic polyester resin used as a starting material or blended with other aliphatic polyester resins. As the blending technique, either of pellet blending or fusion blending are suitable, and methods know in this technical field can be used. However, since aliphatic polyester resins generally have hydrolyzability, during handling it is necessary to be careful about moisture absorption.

In addition, in the resin composition of the present invention, as desired, additives which are used normally in this technical field, for example, antioxidants, heat stabilizers, ultra-violet light absorbing agents, hydrolysis reduction agents, lubricants, anti-static agents, flame retardants, crystallization promoters, fillers, and the like, maybe added within ranges that will not have a deleterious effect on the special properties of the present invention. More specifically, as antioxidants, hindered phenol antioxidants such as p-t-butylhydroxytoluene, and p-t-butylhydroxyanisol can be mentioned; as heat stabilizers, triphenylphosphite, trilaurylphosphite, trisnoryl-phenylphospite, and the like can be mentioned; as ultra-violet light absorbing agents, p-t-butylphenyl salicylate, 2-hydroxy-4-methoxy benzophenone, 2-hydroxy-4-methoxy-2'-carboxybenzophenone, 2,4,5-trihydroxybutyrophenone and the like can be mentioned; as hydrolysis reduction agents, carboxyimide stabilizers and the like can be mentioned; as lubricants, calcium stearate, zinc stearate, barium stearate, sodium palmitate, and the like can be mentioned; as anti-static agents, N,N-bis(hydroxyethyl)alkyl amine, alkylamine, alkylarylsulfonate, alkylsulfonate, and the like can be mentioned; as flame retardants, hexabromocyclododecane, tris-(2,3-dichloropropyl)phosphate, pentabromophenylarylether, and the like can be mentioned; as crystallization promoters, polyethylene terephthalate, poly-transcyclohexane dimethanol terephthalate, and the like can be mentioned; as inorganic fillers, calcium carbonate, silica, titanium oxide, talc, mica, barium sulfate, alumina, and the like can be mentioned; and as organic fillers, wood flour, rice husks, waste paper such as newspaper paper, various types of starch (including starch whose structure has been modified such as alpha-starch and the like), cellulose, and the like can be mentioned.

In the following, the present invention is explained in more detail using Examples.

1. MFR is measured under the conditions of a temperature of 190° C, and a load of 2.16 kgf, based on the JIS K7210.

2. The measurement of the Mw according to a GPC-MALLS method was carried out using the following apparatus and under the following conditions.

In addition, in order to increase measurement accuracy, the Mw was calculated by cutting the low molecular weight component having an average molecular weight of 2000 or less.

(1) GPC Measurement

| | |
|---|---|
| Device: | Waters 150 - C |
| Eluent: | 15 mM of ammonium acetate added to HFIP (1,1,1,3,3,3-hexafluoro-2-propanol) |
| Flow Rate: | 1.0 ml/minute |
| Column: | Shodex GPC HFIP - 806M manufactured by Showa Denko K.K. |
| Measurement Temperature: | 40° C |

(2) MALLS Measurement

| | |
|---|---|
| Device: | Multi-angle light dispersion detector (DAWNDSP) manufactured by Wyatt Technology Co. |
| Light Source: | 5 μW He - Ne laser |
| $d_n/d_c$: | measured using the following differential refractometer. |
| Device: | Chromatics KMX-16 (Milton Roy Co.) |
| Solvent: | 15 mM of ammonium acetate added to HFIP |
| $A_2$: | Calculated by means of static light scattering measurement. |

3. The presence or absence of long chain branches was determined by the above-mentioned method.

4. The swell value was calculated according to the above-mentioned method.

5. Biodegradability was evaluated by burying a sample of 100 μm in thickness, molded using a press plate, at a depth of 10 cm under the ground at the site of the Kawasaki Research Center (Kawasaki City), and the condition after 2 years was evaluated visually and by weight loss using the following four levels.

| | |
|---|---|
| ◎ | ragged condition with 70% or greater loss of weight |
| ○ | weight loss of 40 to less than 70% |
| △ | weight loss of 5 to less than 40% |
| X | weight loss of less than 5% |

6. Young's modulus was measured based on ASTM D822.

7. Yield strength, tensile strength at break, and elongation at break were measured in conformity with JIS Z1702.

8. Tear strength was measured using an Elmendorf tearing tester under the above-mentioned conditions after regulating the condition of the sample for 24 hours under the conditions of a temperature of 23° C and a relative humidity of 50%, in conformity with JIS P8116.

As the aliphatic polyester resin, bionolle #1001 (MFR: 1.0 g/10 minutes) (hereinafter referred to as polyester - 1) and #3001 (MFR: 1.0 g/10 minutes) (hereinafter referred to as polyester - 2) manufactured by Showa Highpolymer Co. Ltd.; polylactic acid (trade name: Lacty-1012; MFR: 0.6 g/10 minutes) (hereinafter referred to as polyester - 3) manufactured by Shimadzu Corp.; PHB/PHV (trade name: biopol D311G; MFR: 27 g/10 minutes) (hereinafter referred to as polyester - 4) manufactured by Monsanto Co.; polycaprolactone (trade name: placcel H-7; MFR: 3.0 g/10 minutes) (hereinafter referred to as polyester - 5) manufactured by Daicel Chemicals; and bionolle #1010 (MFR: 12.0 g/10 minutes) (hereinafter referred to as polyester - 6) and bionolle #3010 (MFR: 10 g/10 minutes) (hereinafter referred to as polyester - 7) manufactured by Showa Highpolymer Co. Ltd. were used.

As the organosilane compound which contains amino groups, 3-aminopropyl triethoxysilane (A-1100 manufactured by Nippon Yunica Co.) (hereinafter referred to as amino silane - 1); 3-ureido propyltriethoxysilane (A-1160 manufactured by the same company) (hereinafter referred to as aminosilane - 2); and 3-amino propylmethyl diethoxysilane (hereinafter referred to as aminosilane - 3) were used. As silane compounds used for comparison, tetraethoxysilane (hereinafter referred to as silane - 1); methyltriethoxysilane (hereinafter referred to as silane - 2); vinyltriethoxysilane (hereinafter referred to as silane - 3); 3-methacryloxypropyl trimethoxysilane (hereinafter referred to as silane - 4); and 3-glyside oxypolypyltrimethoxysilane (A-187 manufactured by Nippon Yunica) (hereinafter referred to as silane - 5) were used.

In addition, as a plasticizer, adipic etherester plasticizer (Adekaizer RS-107 manufactured by Asahi Denka Kogyo K.K.) was used.

Examples 1 to 13 and Comparative Examples 1 to 6

Each of the resin compositions was prepared using the following method and using (A) aliphatic polyester resins and (B) silane compounds of the types and quantities shown in Table 1. In Example 13, as component (B) aminosilane-1 and aminosilane-3 were used together. In cases where a plasticizer was used, the silane compound and the plasticizer were mixed in advance and then used.

Each of the components were mixed using a Henschel mixer, and then kneaded at a temperature of 190° C, and at reduced pressure with a vacuum vent pressure of 50 mmHgA using a twin screw extruder (a differing direction type; screw diameter of 30 mm ⌀ ; manufactured by Nakatani) with a vacuum vent attached, and thereby pellets were obtained. The obtained pellets were dried for 24 hours in a vacuum drier at a temperature of 50° C, and then the weight avenge molecular weight and MFR were measured. The obtained results are shown in Table 2.

Table 1

| | (A) Component | | | (B) Component | | (C) Component Amount (parts by weight) |
|---|---|---|---|---|---|---|
| | Type | Mw (1000) | Amount (parts by weight) | Type | Amount (parts by weight) | |
| Example 1 | polyester-1 | 14 | 100 | aminosilane-1 | 0.25 | - |
| Example 2 | polyester-1 | 14 | 100 | aminosilane-1 | 0.25 | 0.5 |
| Example 3 | polyester-1 | 14 | 100 | aminosilane-1 | 0.5 | - |
| Example 4 | polyester-2 | 16 | 100 | aminosilane-1 | 0.25 | 0.5 |
| Example 5 | polyester-2 | 16 | 100 | aminosilane-2 | 0.25 | - |
| Example 6 | polyester-3 | 19 | 100 | aminosilane-1 | 0.25 | - |
| Example 7 | polyester-4 | 31 | 100 | aminosilane-1 | 0.25 | - |
| Example 8 | polyester-5 | 12 | 100 | aminosilane-1 | 0.25 | - |
| Example 9 | polyester-6 | 9 | 100 | aminosilane-1 | 0.25 | 0.5 |
| Example 10 | polyester-7 | 10 | 100 | aminosilane-1 | 0.25 | 0.5 |

Table 1 (continued)

| | (A) Component | | | (B) Component | | (C) Component Amount (parts by weight) |
|---|---|---|---|---|---|---|
| | Type | Mw (1000) | Amount (parts by weight) | Type | Amount (parts by weight) | |
| Example 11 | polyester-1 | 14 | 100 | aminosilane-1 | 0.75 | 0.5 |
| Example 12 | polyester-6 | 9 | 100 | aminosilane-3 | 0.25 | 0.5 |
| Example 13 | polyester-2 | 16 | 100 | aminosilane-1 | 0.25 | 0.5 |
| | | | | aminosilane-3 | 0.25 | |
| Comparative Example 1 | polyester-2 | 16 | 100 | silane-1 | 0.25 | - |
| Comparative Example 2 | polyester-2 | 16 | 100 | silane-2 | 0.25 | - |
| Comparative Example 3 | polyester-2 | 16 | 100 | silane-3 | 0.25 | - |
| Comparative Example 4 | polyester-2 | 16 | 100 | silane-4 | 0.5 | - |
| Comparative Example 5 | polyester-2 | 16 | 100 | silane-5 | 0.5 | - |
| Comparative Example 6 | polyester-2 | 16 | 100 | silane-2 | 0.25 | 0.5 |

Table 2

| | MFR (g/10 min.) | Mw (1000) | Long chain branches | Swell Value | Biodegradability |
|---|---|---|---|---|---|
| Example 1 | 0.32 | 17 | present | 70 | ◯ |
| Example 2 | 0.33 | 17 | present | 65 | ◯ |
| Example 3 | 0.10 | 20 | present | 100 | ◯ |
| Example 4 | 0.35 | 19 | present | 75 | ◎ |
| Example 5 | 0.50 | 18 | present | 60 | ◎ |
| Example 6 | 0.30 | 21 | present | 20 | △ ~ ◯ |
| Example 7 | 10.0 | 36 | present | 15 | ◎ |
| Example 8 | 2.0 | 14 | present | 35 | ◎ |
| Example 9 | 3.0 | 16 | present | 40 | ◯ |
| Example 10 | 1.8 | 18 | present | 55 | ◎ |
| Example 11 | 0.05 | 28 | present | 150 | ◯ |
| Example 12 | 4.0 | 11 | few present | 40 | ◯ |
| Example 13 | 0.1 | 24 | present | 80 | ◎ |
| Comparative Example 1 | 0.95 | 16 | not present | 40 | ◎ |

Table 2 (continued)

|  | MFR (g/10 min.) | Mw (1000) | Long chain branches | Swell Value | Biodegradability |
|---|---|---|---|---|---|
| Comparative Example 2 | 1.1 | 16 | not present | 35 | ◎ |
| Comparative Example 3 | 1.0 | 16 | not present | 35 | ◎ |
| Comparative Example 4 | 1.5 | 15 | not present | 30 | ◎ |
| Comparative Example 5 | 1.1 | 16 | not present | 35 | ◎ |
| Comparative Example 6 | 1.5 | 16 | not present | 30 | ◎ |

Example 14

A drying treatment was conducted on the resin composition of Example 4 for 12 hours at a temperature of 70° C in a vacuum dryer, then a film having a thickness of 30 μm was formed using an air-cooling blown film molder (a vertical multiple blowing type air ring; having a screw diameter of 55 mm, a die diameter of 100 mm, die with lip-gap of 1.2 mm, manufactured by Yoshii Tekko Co.) underconditions of a blow-up ratio of 4.0, a take-out speed of 10 m/minute.

Example 15

A film was formed in the same way as in Example 14 with the exception that the blow-up ratio was 3.5, the take-out speed was 30 m/minute, the thickness was 20 μm, and a bubble stabilizing body (Teflon covered cylinder having a diameter of 95 mm and a length of 60 cm) was fitted to the surfaces of the dies.

Example 16

A film was formed in the same way as in Example 15 with the exceptions that the blow-up ratio was 4.0, the take-out speed was 40 m/minute, the thickness was 15 μm and the composition of Example 13 was used.

Example 17

A film having a thickness of 15 μm was formed using the same device as used in Example 15, under conditions of a blow-up ratio of 4, a take-out speed of 30 m/minute and using a resin obtained by fusion blending the resin composition of Example 13 with polyester-2 in a 1 to 1 ratio.

Comparative Example 7

Polyester-2 was molded under the same conditions as used in Example 14. A film was obtained which could not be described as having satisfactory mold stability.

Comparative Example 8

An attempt was made to mold polyester-2 under the same conditions as in Example 15, but it was not possible to form a film.
The physical properties of the films of Examples 14 to 17 and Comparative Example 7 are shown in Table 3.

Table 3

| | Young's Modulus (kg/cm$^2$) | | Yield Strength (kg/cm$^2$) | | Rupture Strength (kg/cm$^2$) | | Elongation at Rupture (%) | | Tearing Strength (kg/cm) | |
|---|---|---|---|---|---|---|---|---|---|---|
| | MD | TD | MD | TD | MD | TD | MD | TD | MD | TD |
| Example 14 | 3700 | 4400 | 220 | 200 | 500 | 510 | 650 | 850 | 5.5 | 14 |
| Example 15 | 4000 | 4600 | 200 | 200 | 540 | 500 | 700 | 780 | 8 | 11 |
| Example 16 | 4000 | 4800 | 210 | 220 | 520 | 540 | 680 | 750 | 8 | 13 |
| Example 17 | 4000 | 4500 | 220 | 220 | 560 | 590 | 720 | 800 | 9 | 11 |
| Comparative Example 7 | 2900 | 3700 | 180 | 190 | 600 | 600 | 600 | 900 | 3.2 | 14 |

Example 18

A substrate (kraft paper having a weight of 70 g/m$^2$) was laminated with the resin composition of Example 9 and using an extrusion lamination molder (die width: 800 mm; and extrusion screw diameter: 65 mm; manufactured by Modern Machinery) at a molding speed of 100 m/minute, and a thickness of 20 μm. The neck-in amount was stabilized at a total of 105 mm and the variation width was stabilized at 1.5 mm or less. Adhesiveness for the kraft paper was so excellent that cohesive failure of the kraft paper occurred. In addition, the biodegradability was evaluated as ◎.

Comparative Example 9

Polyester-6 was lamination molded under the same conditions as for Example 18. Neck-in was 175 mm, the variation width was 5 mm or greater, and there was no practical applicability.

Comparative Example 19

Pellets were made using an extruder and by adding 1 part by weight of talc (LMS-100 manufactured by Fuji Talc Co.) as a foam regulating agent to every 100 parts by weight of the resin composition of Example 9. A foam was prepared using the obtained pellets and a 50/50 gas mixture of HCFC-22/HCFC-142b as the foaming agent, and using a tandem foam molder. The gas injection pressure was 10 MPa, and the injection amount was 7 weight % with respect to the resin. The obtained foam had an expansion ratio of 20 times and had a beautiful external appearance. In addition, biodegradability was evaluated as ◯.
In addition, the expansion ratio is the value measured after curing for two weeks at a temperature of 40° C, and restoring shrinkage.

Example 20

A foam was formed under the same conditions as in Example 19 using the resin composition of Example 10. The obtained foam had an expansion ratio of 19 times and had a beautiful external appearance. In addition, biodegradability was evaluated as ◎.

Comparative Example 10

A foam was formed under the same conditions as in Example 19 using polyester-6. The obtained foam had an expansion ratio of 3 times and had an extremely poor external appearance.

Example 21

A sheet having a thickness of 0.7 mm and a width of 640 mm was formed using a T-die extruder and the resin composition of Example 2. The moldable time (the time until the sheet hangs [sags] down 40 mm from the stretching position) for the obtained sheet was 30 seconds using a vacuum molder manufactured by Asano Research Co. In addition, the biodegradability was evaluated as ◯.

Example 11

A sheet was formed under the same conditions as in Example 21 using polyester-2. The molding time for the obtained sheet was 7 seconds. In addition, the biodegradability was evaluated as ◯.

Industrial Applicability

Since the high molecular weight aliphatic polyester resin composition of the present invention has biodegradability, has had its molecular weight further increased, and has had long chain branches introduced, it is superior in various properties such as in mechanical strength and the like. Furthermore, it has excellent mold processing properties such as for film molding, extrusion lamination molding, sheet molding, blow molding, vacuum molding, extrusion gas foaming, and the like. In addition, it is useful because it can be ideally used in many applications such as various molded products which have high strength and, in particular, in blown films, sheets, laminates, foams, vacuum molded products, blow-molded products, mono-filaments, bands and the like.

**Claims**

1.    A high molecular weight aliphatic polyester resin composition obtained by treating (A) an aliphatic polyester resin with (B) an organosilane compound which contains amino groups.

2.    A high molecular weight aliphatic polyester resin composition according to claim 1, wherein the amount of (B) the organosilane compound which contains amino groups is 0.01 to 10 parts by weight with respect to 100 parts by weight of (A) the aliphatic polyester resin.

3.    A high molecular weight aliphatic polyester resin composition obtained by treating (A) an aliphatic polyester resin with (B) an organosilane compound which contains amino groups and (C) a plasticizer.

4.    A high molecular weight aliphatic polyester resin composition according to claim 3 wherein the amount of (B) the organosilane compound which contains amino groups is 0.01 to 10 parts by weight with respect to 100 parts by weight of (A) the aliphatic polyester resin; and the amount of (C) the plasticizer is 0.5 to 5 parts by weight with respect to 1 part by weight of (B) the organosilane compound which contains amino groups.

5.    A high molecular weight aliphatic polyester resin composition according to one of claims 1 through 4, wherein the weight avenge molecular weight as measured by a GPC-MALLS method is 40000 or greater, and the swell value is 50% or greater.

6.    A high molecular weight aliphatic polyester resin composition according to one of claims 1 through 4, wherein the weight avenge molecular weight as measured by a GPC-MALLS method is 40000 or greater and long chain branches are present.

7.    A molded product obtained by injection molding or extrusion forming a high molecular weight aliphatic polyester resin composition according to one of claims 1 through 4.

8.    A molded product obtained by injection molding or extrusion forming a high molecular weight aliphatic polyester resin composition according to claim 5.

9.    A molded product obtained by injection molding or extrusion foming a high molecular weight aliphatic polyester resin composition according to claim 6.

10.  A blown film having a thickness of 2 to 200 μm molded from a high molecular weight aliphatic polyester resin composition according to one of claims 1 to 4 having a melt flow rate of 3 g/10 minutes or less.

11.  A blown film having a thickness of 2 to 200 μm molded from a high molecular weight aliphatic polyester resin composition according to claim 5 having a melt flow rate of 3 g/10 minutes or less.

12.  A blown film having a thickness of 2 to 200 μm molded from a high molecular weight aliphatic polyester resin composition according to claim 6 having a melt flow rate of 3 g/10 minutes or less.

**13.** A blown film according to claim 10, wherein the tearing strength in both the MD direction and the TD direction is 7 kg/cm or greater.

**14.** A blown film according to claim 11, wherein the tearing strength in both the MD direction and the TD direction is 7 kg/cm or greater.

**15.** A blown film according to claim 12, wherein the tearing strength in both the MD direction and the TD direction is 7 kg/cm or greater.

**16.** A manufacturing method for a high molecular weight aliphatic polyester resin composition characterized by melting and kneading (A) an aliphatic polyester resin and (B) an organosilane compound which contains amino groups using an extruder.

| INTERNATIONAL SEARCH REPORT | International application No. |
|---|---|
| | PCT/JP99/01062 |

**A. CLASSIFICATION OF SUBJECT MATTER**
Int.Cl$^6$ C08L67/04, C08K5/54, C08G63/695, B29C45/00, B29C47/00, B29C55/28
// B29K67:00
According to International Patent Classification (IPC) or to both national classification and IPC

**B. FIELDS SEARCHED**

Minimum documentation searched (classification system followed by classification symbols)
Int.Cl$^6$ C08L67/04, C08K5/54, C08G63/695

Documentation searched other than minimum documentation to the extent that such documents are included in the fields searched
Jitsuyo Shinan Koho      1926-1996   Toroku Jitsuyo Shinan Koho   1994-1999
Kokai Jitsuyo Shinan Koho 1971-1997   Jitsuyo Shinan Keisai Koho   1996-1999

Electronic data base consulted during the international search (name of data base and, where practicable, search terms used)
CAS ONLINE

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A<br><br>A | JP, 58-168625, A (Dainippon Ink & Chemicals,Inc.),<br>5 October, 1983 (05. 10. 83),<br>Claims ; page 2, lower left column, line 15 to<br>page 3, upper left column, line 7 (Family: none) | 1, 2, 5, 6<br>3, 4, 7-9,<br>16<br>10-15 |
| A | JP, 3-68588, A (Sony Corp.),<br>25 March, 1991 (25. 03. 91),<br>Claims ; page 5, upper left column, line 17 to lower<br>left column, line 10 (Family: none) | 1-16 |
| A | JP, 3-139554, A (Kaneka Corp.),<br>13 June, 1991 (13. 06. 91),<br>Claims ; page 2, lower right column, lines 3 to 20 ;<br>page 3, upper right column, line 15 to lower right<br>column, line 16 (Family: none) | 1-16 |
| A | JP, 3-139558, A (Kaneka Corp.),<br>13 June, 1991 (13. 06. 91),<br>Claims ; page 2, lower right column, lines 2 to 19 ;<br>page 3, upper right column, line 14 to lower right<br>column, line 16 (Family: none) | 1-16 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 20 May, 1999 (20. 05. 99) | 1 June, 1999 (01. 06. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)